# EUROPÄISCHE PATENTSCHRIFT

(11) **EP 2 010 624 B1**
(45) Veröffentlichungstag und Bekanntmachung des Hinweises auf die Patenterteilung: **16.10.2013**
(21) Anmeldenummer: 07724483.8
(22) Anmeldetag: 23.04.2007
(51) Int. Cl.: C09K 8/80

(54) **KONSOLIDIERTE PROPPANTS MIT HOHER MECHANISCHER FESTIGKEIT UND VERFAHREN ZU DEREN HERSTELLUNG**
CONSOLIDATED PROPPANTS WITH HIGH MECHANICAL STABILITY AND METHOD FOR PRODUCTION THEREOF
AGENTS DE SOUTÈNEMENT CONSOLIDÉS AYANT UNE RÉSISTANCE MÉCANIQUE ÉLEVÉE, ET PROCÉDÉ POUR LES PRÉPARER

(30) Priorität: 24.04.2006 DE 102006018939
(43) Veröffentlichungstag der Anmeldung: 07.01.2009
(73) Patentinhaber: EPG (Engineered nanoProducts Germany) AG, 64347 Griesheim (DE)
(72) Erfinder: ALTHERR, Andreas, 66583 Spiesen-Elversberg (DE); ENDRES, Klaus, 66424 Homburg (DE); REINHARD, Bernd, 66663 Merzig-Brotdorf (DE); SCHMIDT, Helmut, 66130 Saarbrücken-Güdingen (DE)
(74) Vertreter: Meissner, Bolte & Partner
(86) Internationale Anmeldenummer: PCT/EP2007/003553
(87) Internationale Veröffentlichungsnummer: WO 2007/121975

(56) Entgegenhaltungen:
- EP-A1- 1 167 406
- WO-A-2005/073278
- WO-A-2006/077123
- DE-A1- 19 620 818

## Beschreibung

Die Erfindung betrifft ein Verfahren zur Herstellung von hydrothermal konsolidierten und hydrolytisch beständigen, konsolidierten Proppants mit verbesserter mechanischer Festigkeit.

Bindemittel sind insbesondere für das Binden von kompakten oder körnigen Produkten von hoher Bedeutung. In der Erdölindustrie hat sich besonders das Verfahren des Fracturing zur Steigerung und Stabilisierung der Ölförderleistung in ölhaltigen Lagerstätten erwiesen. Zu diesem Zweck wird zunächst mittels einer hochviskosen Flüssigkeit (Fracture fluid) eine künstliche Spalte in der ölführenden Formation um das Bohrloch herum erzeugt. Damit diese Spalte offen bleibt, wird das hochviskose Fluid mit sogenannten Proppants versehen, die nach dem Wegnehmen des Druckes, der zur Erzeugung und Aufrechterhaltung des Formationsspaltes notwendig ist, die Spalte als eine Region mit erhöhter Porosität und Permeabilität aufrechterhalten. Proppants sind insbesondere Sande und keramische Partikel mit mehreren 100 µm bis einigen Millimetern Durchmesser, die in dem Gebirgsspalt positioniert werden. In der Regel müssen diese Proppants verfestigt werden, um das Auswaschen (flow back) mit dem geförderten Öl zu verhindern. Hierfür sind Bindemittel erforderlich, die unter den Bedingungen des erschlossenen Reservoirs (hoher Druck bei hoher Temperatur, reservoireigenes Grundwasser und aggressive Komponenten in den Rohölen und Gasen) zunächst aushärten und bei der Ölförderung dauerhaft beständig sind.

Für eine effiziente Anwendung von Bindemitteln ist es wichtig, dass die Beständigkeit unter den oben genannten aggressiven Bedingungen möglichst lange aufrechterhalten bleibt, wobei die Bindefestigkeit und die Porosität nicht nennenswert reduziert werden dürfen. Die im Stand der Technik genannten Systeme, die nahezu alle auf organischen Polymeren aufbauen, haben diesbezüglich eine sehr eingeschränkte Lebensdauer.

Die Konsolidierung von Proppants mit geeigneten Bindemitteln ist insbesondere dann schwierig, wenn die konsolidierten Proppants im Vergleich zu den Proppants ohne Bindemittel nicht nennenswert an Porosität einbüßen sollen. So lassen sich z.B. mit organischen Polymerbindemitteln poröse Komposite herstellen, jedoch zeigt sich, dass es kaum möglich ist, die ursprüngliche Porosität aufrecht zu erhalten. Bei reduziertem Bindemitteleinsatz gelingt es zwar, poröse Systeme herzustellen, aufgrund der Eigenschaft der organischen Polymere in Gegenwart von organischen Lösungsmitteln aufzuquellen oder in Lösung zu gehen, sind solche Komposite jedoch für viele Anwendungen, insbesondere bei höheren Temperaturen und in Umgebung organischer Flüssigkeiten, nicht geeignet.

Die Verwendung von rein anorganischen Bindemitteln, die z. B. über den Sol-Gel Prozess zugänglich sind, führt zwar zu einer Bindung, bei der im Proppant eine entsprechende Porosität aufrecht erhalten wird, jedoch ist das gebundene System sehr spröde, brüchig und gegenüber mechanischen Belastungen wie Scherbelastungen oder starken Druckbelastungen nicht ausreichend widerstandsfähig.

Ferner ist es häufig zweckmäßig, Proppants unter den Bedingungen herzustellen, unter denen sie später auch angewandt werden. Daher ist es häufig notwendig, die Proppants vor Ort nach dem Einbringen in den Fracture unter den geologischen Druck- und Temperaturbedingungen zu härten. Dies ist bei vielen Konsolidierungsmitteln nicht oder unter Verlust der notwendigen Hydrolysebeständigkeiten möglich.

In der Patentanmeldung DE 102005002806.3 des Anmelders wird ein Verfahren zur Herstellung von konsolidierten Proppants beschrieben, bei dem als Konsolidierungsmittel ein Hydrolysat oder Kondensat aus einem Organosilan, einem hydrolysierbaren Silan und einer Metallverbindung verwendet wird. Durch die Verwendung dieses organisch modifizierten anorganischen Konsolidierungsmittels werden konsolidierte Proppants erhalten, die gegenüber dem Stand der Technik eine deutlich verbesserte Hydrolyse- und Korrosionsstabilität unter Hydrothermalbedingungen zeigen. Da bei dem Einsatz der Proppants eine hohe Beständigkeit gegenüber der Bildung fragmentärer Strukturen erforderlich ist, bestand noch Bedarf nach einer zusätzlichen Verbesserung der mechanischen Festigkeit der erhaltenen Proppants.

WO 2005/073278 betrifft ein Konsolidierungsmittel für Formkörper und geologische Formationen aus porösen oder partikulären Materialien, enthaltend ein Hydrolysat oder Vorkondensat von mindestens einem Organosilan der Formel RₙSiX₄₋ₙ, worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat und gegebenenfalls mindestens einem hydrolysierbaren Silan der Formel SiX₄, worin die Reste X die vorstehende Bedeutung haben. Zur Herstellung des Vorkondensats können auch hydrolysierbare Metallverbindungen eingesetzt werden.

EP-A1-1167406 beschreibt eine strahlungshärtbare Zusammensetzung, umfassend ein Kondensationsprodukt aus einer Mischung von einem Alkoxy enthaltenden Organopolysiloxan und Alkoxysilanen und einem multifunktionellen Acrylat, die zur Beschichtung eines Harzformkörpers geeignet ist.

DE-A1-19620818 betrifft vernetzbare Zusammensetzungen auf Basis von Organosiliciumverbindungen, an die Maleinsäure- und/oder Fumarsäureverbindungen angelagert sind.

Aufgabe der Erfindung war es daher, Verfahren zur Herstellung konsolidierter Proppants bereitzustellen, die bei den Druck- und Temperaturverhältnissen des Einsatzgebiets hydrolyse- und korrosionsstabil sind und eine relativ hohe Porosität aufweisen und darüber hinaus eine weiter verbesserte mechanische Festigkeit besitzen.

Die Aufgabe konnte überraschenderweise durch ein Verfahren zur Herstellung von hydrolytisch und hydrothermal beständigen konsolidierten Proppants gelöst werden, bei dem man (A) ein Konsolidierungsmittel mit einem Proppant vermengt und (B) das mit dem Proppant vermengte Konsolidierungsmittel unter erhöhtem Druck von größer als 1 bar und erhöhter Temperatur höher als 20°C härtet, wobei das Konsolidierungsmittel
(A1) ein Hydrolysat oder Kondensat aus
   (a) mindestens einem funktionalisierten Organosilan der allgemeinen Formel (I)

      (Rx)_{b}R_{c}SiX_{4-b-c} (I)

      worin die Reste Rx gleich oder verschieden sind und hydrolytisch nicht abspaltbare Gruppen darstellen, die mindestens eine vernetzbare funktionelle Gruppe umfassen, die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen, b den Wert 1, 2 oder 3 hat und c den Wert 0, 1 oder 2 hat, wobei die Summe (b+c) 1, 2 oder 3 ist;
   (b) gegebenenfalls mindestens einem hydrolysierbaren Silan der allgemeinen Formel (II)

      SiX₄ (II)

      worin X wie in Formel (I) definiert ist; und
   (c) mindestens einer Metallverbindung der allgemeinen Formel (III)

      MXₐ (III)
   worin M ein Metall der Hauptgruppen I bis VIII oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht;
   wobei das molare Verhältnis von eingesetzten Siliciumverbindungen zu eingesetzten Metallverbindungen im Bereich von 10.000:1 bis 10:1 liegt, und
(A2) ein organisches Vernetzungsmittel mit mindestens zwei funktionellen Gruppen umfasst.

Durch das erfindungsgemäße Verfahren konnte erstaunlicherweise eine weitere Steigerung der mechanischen Verfestigung der Proppantproben im Vergleich zu organisch modifizierten anorganischen Bindern erzielt werden, insbesondere unter Hydrothermalbedingungen. Die Erhöhung der mechanischen Verfestigung ist insbesondere zur Erzielung hoher Resistenzen gegenüber der Bildung von fragmentären Strukturen (z. B. fines-Bildung) wichtig. Es konnte gezeigt werden, dass durch das erfindungsgemäß verwendete Konsolidierungsmittel interpenetrierende anorganische und organische Netzwerke bei der Härtung gebildet werden, wodurch eine deutliche Verbesserung in der mechanischen Festigkeit erzielt werden kann.

Es zeigte sich insbesondere, dass die Netzwerkfestigkeit durch Verwendung eines organischen Vernetzungsmittels mit mindestens zwei funktionellen Gruppen, bevorzugt vernetzender Dimethacrylate oder höherfunktioneller Methacrylate, die zusammen mit den funktionalisierten Organosilanen, vorzugsweise acryl- und/oder vinylfunktionalisierten Silanen, ein organisches Netzwerk bilden, das über die Silane kovalent mit dem anorganischen Netzwerk verknüpft ist, und die mechanische Verfestigung deutlich verbessert werden konnten. Gleichzeitig wurde eine Flexibilisierung des Konsolidierungsmittels erreicht.

Die erfindungsgemäß gebundenen Proppants werden auch im Autoklaven bei hohem Druck und hoher Temperatur auch über einen längeren Zeitraum nicht abgebaut und eine stabile Bindung bleibt weiterhin erhalten. Der Einsatz von hydrolysierbaren Metallverbindungen der Formel (III) bringt zwei Vorteile mit sich: eine besonders gute Hydrolysestabilität der gehärteten Konsolidierungsmittel unter Hydrothermalbedingungen und die Möglichkeit, das Konsolidierungsmittel auch unter erhöhtem Druck zu härten. Überraschenderweise blieb diese Fähigkeit auch bei Einsatz des organischen Vernetzungsmittels erhalten.

Proppants wurden bereits vorstehend allgemein erläutert und sind dem Fachmann auf dem Gebiet allgemein bekannt. Proppants sind Pellets oder Teilchen, die häufig im wesentlichen kugelförmig sind. Sie weisen im allgemeinen etwa einen mittleren Durchmesser von mehreren 100 Mikrometern auf, z.B. im Bereich zwischen 1.000 und 1 µm. Die Proppants können z.B. grobkörniger Sand, keramische Teilchen, z.B. aus Al₂O₃, ZrO₂ oder Mullit, Naturprodukt wie Walnussschalen, oder Metall- oder Kunststoffteilchen, wie Aluminium- oder Nylon-Pellets, sein. Bei den Proppants handelt es sich bevorzugt um Sand oder Keramikteilchen.

Das Konsolidierungsmittel umfasst ein Hydrolysat oder Kondensat aus
(a) mindestens einem funktionalisierten Organosilan der allgemeinen Formel (I)

   (Rx)_{b}R_{c}SiX_{4-b-c} (I)

   worin die Reste Rx gleich oder verschieden sind und hydrolytisch nicht abspaltbare Gruppen darstellen, die mindestens eine vernetzbare funktionelle Gruppe umfassen, die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen, b den Wert 1, 2 oder 3 hat und c den Wert 0, 1 oder 2 hat, wobei die Summe (b+c) 1, 2 oder 3 ist;
(b) gegebenenfalls mindestens einem hydrolysierbaren Silan der allgemeinen Formel (II)

   SiX₄ (II)

   worin X wie in Formel (I) definiert ist; und
(c) mindestens einer Metallverbindung der allgemeinen Formel (III)

   MXₐ (III)

   worin M ein Metall der Hauptgruppen I bis VIII oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht;
wobei das molare Verhältnis von eingesetzten Siliciumverbindungen zu eingesetzten Metallverbindungen im Bereich von 10.000:1 bis 10:1 liegt.

Es ist bevorzugt, dass ein Silan der allgemeinen Formel (II) eingesetzt wird. In einer bevorzugten Ausführungsform verwendet man zur Herstellung des Hydrolysats oder Kondensats ferner zusätzlich ein Organosilan der Formel (Ia)

RₙSiX₄₋ₙ (Ia)

worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat.

In der Formel (I) ist b bevorzugt 1 und c bevorzugt 0, so dass das funktionalisierte Organosilan der Formel (I) vorzugsweise (Rx)SiX₃ oder (Rx)R_{c}SiX_{3-c}, worin c 1 oder 2 ist. In der Formel (Ia) ist n bevorzugt 1 oder 2 und besonders bevorzugt 1. Im folgenden werden die Substituenten X, R und Rx in den Formeln (I), (Ia), (II) und (III) näher erläutert.

Geeignete Beispiele für hydrolytisch abspaltbare Gruppen X der obigen Formeln sind Wasserstoff, Halogen (F, Cl, Br oder I, insbesondere Cl oder Br), Sulfat, Alkoxy (z.B. C₁₋₆-Alkoxy, wie z.B. Methoxy, Ethoxy, n-Propoxy, i-Propoxy und n-, i-, sek.- oder tert.-Butoxy), Aryloxy (vorzugsweise C₆₋₁₀-Aryloxy, wie z.B. Phenoxy), Alkaryloxy, z.B. Benzoyloxy, Acyloxy (z.B. C₁₋₆-Acyloxy, vorzugsweise C₁₋₄-Acyloxy, wie z.B. Acetoxy oder Propionyloxy) und Alkylcarbonyl (z.B. C₂₋₇-Alkylcarbonyl wie Acetyl). Ebenfalls geeignet sind NH₂, mit Alkyl, Aryl und/oder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z.B. bei Si-Polyolkomplexen mit Glycol, Glycerin oder Brenzcatechin. X kann auch eine Hydroxygruppe sein. Die genannten Gruppen können gegebenenfalls Substituenten, wie Halogen, Hydroxy oder Alkoxy, enthalten.

Bevorzugte hydrolytisch abspaltbare Reste X sind Halogen, Alkoxygruppen und Acyloxygruppen. Besonders bevorzugte hydrolytisch abspaltbare Reste sind C₂₋₄-Alkoxygruppen, insbesondere Methoxy und Ethoxy.

Die hydrolytisch nicht abspaltbaren Reste R und Rx der Formeln (I) und (Ia) sind insbesondere organische Reste, die über ein Kohlenstoffatom an das Si-Atom gebunden sind. Diese Si-C-Bindung ist nicht hydrolysierbar. Dieses C-Atom weist neben der Bindung an das Si vorzugsweise nur noch Bindungen mit C- und/oder H-Atomen auf. Der Rest R weist insbesondere keine vernetzbare funktionelle Gruppe auf.

Die hydrolytisch nicht abspaltbaren Reste R der Formeln (Ia) und gegebenenfalls (I) sind z.B. Alkyl (z.B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl), Aryl (insbesondere C₆₋₁₀-Aryl, wie Phenyl und Naphthyl) und entsprechende Aralkyl- und Alkarylgruppen, wie Tolyl und Benzyl, und cyclische C₃₋C₁₂-Alkyl- und -Alkenylgruppen, wie Cyclopropyl, Cyclopentyl und Cyclohexyl. Bevorzugte Reste R, die eingesetzt werden, insbesondere für Silane der Formel (Ia), sind Reste ohne Substituenten oder funktionelle Gruppen, insbesondere Alkylgruppen, vorzugsweise mit 1 bis 4 Kohlenstoffatomen, insbesondere Methyl und Ethyl, sowie Arylreste, wie Phenyl, wobei Alkylgruppen besonders bevorzugt sind.

Die Reste Rx umfassen mindestens eine funktionelle Gruppe, über die eine Vernetzung des Kondensats durch das organische Vernetzungsmittel möglich ist, wodurch ein interpenetrierendes organisches und anorganisches Netzwerk bei der Härtung gebildet werden kann. Beispiele für die funktionelle Gruppe, über die eine Vernetzung möglich ist, sind Epoxid (z.B. Glycidyl oder Glycidyloxy), Hydroxy, Amino, Carboxy, Vinyl, Alkinyl, Acryl oder Acryloxy, Methacryl oder Methacryloxy und Isocyanato. Diese funktionellen Gruppen sind über zweiwertige Brückengruppen, insbesondere Alkylen-, Alkenylen- oder Arylen-Brückengruppen, die durch Sauer-stoff- oder -NH-Gruppen unterbrochen sein können, an das Siliciumatom gebunden. Die Brückengruppen enthalten z. B. 1 bis 18, vorzugsweise 1 bis 8 und insbesondere 1 bis 6 Kohlenstoffatome. Die genannten zweiwertigen Brückengruppen leiten sich z.B. von den oben genannten einwertigen Alkyl- oder Arylresten ab. Bevorzugt ist die Brückengruppe eine Alkylen-, insbesondere eine Propylengruppe. Der Rest Rx weist vorzugsweise eine funktionelle Gruppe auf, kann aber auch mehr als eine funktionelle Gruppe aufweisen. Bevorzugte funktionelle Gruppen, über die eine Vernetzung möglich ist, sind Vinyl, Acryl oder Acryloxy, Methacryl oder Methacryloxy.

Beispiele für hydrolytisch nicht abspaltbare Reste Rx, über die eine Vernetzung möglich ist, sind Alkenyl, z.B. C₂₋₂₀-Alkenyl, insbesondere C₂₋₄-Alkenyl, wie Vinyl, 1-Propenyl, 2-Propenyl und Butenyl, Glycidyl- oder Glycidyloxy-(C₁₋₂₀)-alkylen, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)ethyl, (Meth)acryloxy-(C₁₋₆)-alkylen, z.B. (Meth)acryloxymethyl, (Meth)acryloxyethyl, (Meth)acryloxypropyl oder (Meth)acryl-oxybutyl, und 3-Isocyanatopropyl. Besonders bevorzugt ist (Meth)acryloxypropyl. (Meth)acryl steht in dieser Beschreibung für Acryl und Methacryl. Diese funktionalisierten Organosilane werden auch entsprechend ihrer funktionalisierten Gruppe z.B. als (Meth)acrylsilane, Vinylsilane, Epoxysilane usw. bezeichnet.

Beispiele für funktionalisierte Organosilane der allgemeinen Formel (I) sind: CH₂=CH-Si(OOCCH₃)₃, CH₂=CH-SiCl₃, CH₂=CH-Si(OC₂H₅)₃, CH₂=CHSi(OC₂H₅)₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, CH₂=C(CH₃)COO-C₃H₇-Si(OC₂H₅)₃,

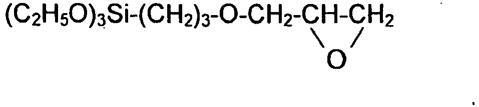

Bevorzugte Beispiele sind Acrylsilane und Methacrylsilane, wie (Meth)acryloxy-alkyltrimethoxysilan und (Meth)acryloxyalkyltriethoxysilan, insbesondere (Meth)-acryloxypropyltrimethoxysilan und (Meth)acryloxypropyltriethoxysilan, (Meth)acryl-oxypropylmethyldimethoxysilan, (Meth)acryloxyethyltrimethoxysilan und (Meth)acryl-oxyethylmethyldimethoxysilan, wobei Methacryloxypropyltrimethoxysilan besonders bevorzugt ist.

Beispiele für Organosilane der allgemeinen Formel (Ia) sind Verbindungen der folgenden Formeln, wobei die Alkylsilane und insbesondere Methyltriethoxysilan besonders bevorzugt sind:
CH₃SiCl₃, CH₃Si(OC₂H₅)₃, C₂H₅SiCl₃, C₂H₅Si(OC₂H₅)₃, C₃H₇Si(OC₂H₅)₃, C₆H₅Si(OC₂H₅)₃, (C₂H₅O)₃Si-C₃H₆-Cl, (CH₃)₂SiCl₂, (CH₃)₂Si(OC₂H₅)₂, (CH₃)₂Si(OH)₂, (C₆H₅)₂SiCl₂, (C₆H₅)₂Si(OC₂H₅)₂, (i-C₃H₇)₃SiOH, n-C₆H₁₃CH₂CH₂Si(OC₂H₅)₃, n-C₈H₁₇CH₂CH₂Si(OC₂H₅)₃.

Beispiele für die hydrolysierbaren Silane der allgemeinen Formel (II) sind Si(OCH₃)₄, Si(OC₂H₅)₄, Si(O-n- oder i-C₃H₇)₄, Si(OC₄H₉)₄, SiCl₄, HSiCl₃, Si(OOCCH₃)₄. Von diesen hydrolysierbaren Silanen ist Tetraethoxysilan besonders bevorzugt.

Die Silane lassen sich nach bekannten Methoden herstellen; vgl. W: Noll, "Chemie und Technologie der Silicone", Verlag Chemie GmbH, Weinheim/Bergstraße (1968).

Bei der Metallverbindung der allgemeinen Formel (III)

MXₐ (III)

ist M ein Metall der Hauptgruppen I bis VIII oder der Nebengruppen II bis VIII des Periodensystems der Elemente einschließlich Bor, X wie vorstehend definiert, wobei zwei Gruppen X durch eine Oxogruppe ersetzt sein können, und entspricht a der Wertigkeit des Elements.

M ist von Si verschieden. Hier wird Bor auch zu den Metallen gezählt. Beispiele für derartige Metallverbindungen sind Verbindungen von glas- oder keramikbildenden Elementen, insbesondere Verbindungen mindestens eines Elements M aus den Hauptgruppen III bis V und/oder den Nebengruppen II bis IV des Periodensystems der Elemente. Vorzugsweise handelt es sich dabei um hydrolysierbare Verbindungen von Al, B, Sn, Ti, Zr, V oder Zn, insbesondere solche von Al, Ti oder Zr, oder Mischungen aus zwei oder mehreren dieser Elemente. Ebenfalls einsetzbar sind z.B. hydrolysierbare Verbindungen von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthanoiden wie Ce können verwendet werden. Bevorzugt sind Metallverbindungen der Elemente B, Ti, Zr und Al, wobei Ti besonders bevorzugt ist.

Bevorzugte Metallverbindungen sind z. B. die Alkoxide von B, Al, Zr und insbesondere Ti. Geeignete hydrolysierbare Metallverbindungen sind z. B. Al(OCH₃)₃, Al(OC₂H₅)₃, Al(O-n-C₃H₇)₃, Al(O-i-C₃H₇)₃, Al(O-n-C₄H₉)₃, Al(O-sek.-C₄H₉)₃, AlCl₃, AlCl(OH)₂, Al(OC₂H₄OC₄H₉)₃, TiCl₄, TiOSO₄, Ti(OC₂H₅)₄, Ti(O-n-C₃H₇)₄, Ti(O-i-C₃H₇)₄, Ti(OC₄H₉)₄, Ti(2-ethylhexoxy)₄, ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylhexoxy)₄, sowie Zr-Verbindungen, die komplexierende Reste aufweisen, wie z.B. β-Diketon- und (Meth)acrylreste, Natriumethanolat, Kaliumacetat, Borsäure, BCl₃, B(OCH₃)₃, B(OC₂H₅)₃, SnCl₄, Sn(OCH₃)₄, Sn(OC₂H₅)₄, VOCl₃ und VO(OCH₃)₃.

In einer besonders bevorzugten Ausführungsform wird das Konsolidierungsmittel unter Verwendung eines Methacrylsilans, wie Methacryloxypropyltrimethoxysilan, eines Alkylsilans wie Methyltriethoxysilan (MTEOS), eines Orthokieselsäureesters wie Tetraethoxysilan (TEOS) und einer Metallverbindung der Formel (III) hergestellt, wobei die Verwendung einer Metallverbindung von B, Al, Zr und insbesondere Ti besonders bevorzugt ist. In einer Ausführungsform kann auch ein Arylsilan, wie Phenyltriethoxysilan, zugesetzt werden, gegebenenfalls in Kombination mit einem Organosilan der Formel (la).

Zur Herstellung des Konsolidierungsmittels werden bevorzugt mindestens 50 Mol%, bevorzugter mindestens 70 Mol-% und insbesondere mindestens 80 Mol-% Organosilane der Formeln (I) und, falls verwendet, (Ia) mit mindestens einer hydrolytisch nicht abspaltbaren Gruppe, bezogen auf alle für das Hydrolysat oder Kondensat eingesetzten Verbindungen, verwendet. Der Rest sind hydrolysierbare Verbindungen, nämlich die Metallverbindungen der Formel (III) und gegebenenfalls die hydrolysierbaren Silane der Formel (II), die keine nicht hydrolysierbaren Gruppen aufweisen.

Das molare Verhältnis von eingesetzten Siliciumverbindungen der Formeln (I), (la) und (II) zu eingesetzten Metallverbindungen der Formel (III) liegt im Bereich von 10.000:1 bis 10:1, wobei im Bereich von 2.000:1 bis 20:1 und besonders bevorzugt von 2.000:1 bis 200:1 eine besonders gute Hydrolysestabilität erreicht wird.

Für die Berechnung der molaren Anteile bzw. Verhältnisse, die vorstehend angegeben sind, wird bei den Verbindungen jeweils von den monomeren Verbindungen ausgegangen. Wenn wie nachstehend erläutert bereits vorkondensierte Verbindungen (Dimere usw.) als Ausgangsmaterialien eingesetzt werden, ist auf die entsprechenden Monomere umzurechnen.

Die Hydrolysate oder Kondensate des Konsolidierungsmittels werden aus den hydrolysierbaren Silanen und den hydrolysierbaren Metallverbindungen durch Hydrolyse und gegebenenfalls Kondensation erhalten. Unter Hydrolysaten oder Kondensaten werden dabei insbesondere hydrolysierte bzw. zumindest teilweise kondensierte Verbindungen der hydrolysierbaren Ausgangsverbindungen verstanden. Statt der hydrolysierbaren Monomerverbindungen können auch bereits vorkondensierte Verbindungen als Edukte bei der Synthese des Konsolidierungsmittels eingesetzt werden. Derartige, im Reaktionsmedium vorzugsweise lösliche Oligomere können z.B. geradkettige oder cyclische niedermolekulare Teilkondensate (z.B. Polyorganosiloxane) mit einem Kondensationsgrad von z.B. etwa 2 bis 100, insbesondere etwa 2 bis 6, sein.

Die Hydrolysate oder Kondensate werden vorzugsweise durch Hydrolyse und Kondensation der hydrolysierbaren Ausgangsverbindungen nach dem Sol-Gel-Verfahren erhalten. Beim Sol-Gel-Verfahren werden die hydrolysierbaren Verbindungen mit Wasser, gegebenenfalls in Gegenwart von sauren oder basischen Katalysatoren, hydrolysiert und zumindest teilweise kondensiert. Vorzugsweise erfolgt die Hydrolyse und Kondensation in Gegenwart saurer Kondensationskatalysatoren (z.B. Salzsäure, Phosphorsäure oder Ameisensäure) bei einem pH-Wert von vorzugsweise 1 bis 3. Das sich bildende Sol kann durch geeignete Parameter, z.B. Kondensationsgrad, Lösungsmittel oder pH-Wert, auf die für das Konsolidierungsmittel gewünschte Viskosität eingestellt werden.

Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse und Kondensation können stöchiometrische Wassermengen, aber auch geringere oder größere Mengen verwendet werden. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Oft werden besonders gute Ergebnisse mit weniger als 0,7 Mol Wasser, insbesondere 0,55 bis 0,65 Mol Wasser, pro Mol der vorhandenen hydrolysierbaren Gruppen erzielt. Das erfindungsgemäß verwendete Hydrolysat oder Kondensat liegt insbesondere partikelfrei als Lösung oder Emulsion vor.

Das Konsolidierungsmittel umfasst ferner ein organisches Vernetzungsmittel mit mindestens zwei funktionellen Gruppen. Die funktionellen Gruppen dienen zur Vernetzung des Hydrolysats oder Kondensats. Sie werden so ausgewählt, dass sie mit der funktionellen Gruppe des funktionalisierten Organosilans reaktiorisfähig sind. Bei der Härtung reagieren dann die funktionellen Gruppen des Vernetzungsmittels mit den funktionellen Gruppen des funktionalisierten Organosilans unter Bildung von kovalenten Bindungen, so dass eine Vernetzung erfolgt.

Es können übliche, dem Fachmann bekannte organische Vernetzungsmittel eingesetzt werden. Geeignete Vernetzungsmittel sind z.B. organische Monomere, Oligomere und Polymere oder Vorpolymerisate. Die organischen Vernetzungsmittel sind Netzwerk bildende Polymerisationsprecursoren.

Das organische Vernetzungsmittel kann zwei oder mehr funktionelle Gruppen enthalten. Es sind kettenbildende organische Verbindungen, die für die Polymerisation, Polykondensation oder Polyaddition geeignet sind. Diese organischen Vernetzungsmittel sind dem Fachmann bestens vertraut und er kann sie für den jeweiligen Fall ohne weiteres aussuchen. Die funktionellen Gruppen sind die üblichen polymerisierbaren, polykondensierbaren oder polyaddierbaren Gruppen, die in der Polymerchemie eingesetzt werden. Beispiele für die funktionellen Gruppen sind Epoxy-, Hydroxy-, Amino-, Carboxy-, Isocyanat, Mercapto-, Vinyl-, Acryl- oder Methacrylgruppen, wobei Vinyl-, Acryl- und Methacrylgruppen bevorzugt sind. Auch entsprechende Gruppen von Derivaten der Carbonsäure wie Carbonsäureanhydrid- und Carbonsäurehalogenid-, insbesondere Carbonsäurechloridgruppen sind geeignet.

Die funktionellen Gruppen des Vernetzungsmittels werden mit der vernetzbaren funktionellen Gruppe des funktionalisierten Organosilans abgestimmt, indem korrespondierende Paare von funktionellen Gruppen gewählt werden, die für eine Polymerisations-, Polykondensations- oder Polyadditionsreaktion geeignet sind. Dem Fachmann sind diese korrespondierenden Paare vertraut. Die korrespondierenden funktionellen Gruppen des Organosilans und des Vernetzungsmittels können z.B. jeweils gleiche oder verschiedene C-C-Doppelbindungen, wie Vinyl, Acryl oder Methacryl, sein. Weitere Beispiele für korrespondierende Paare sind Amino/Carboxyl, Epoxy/Amino, Epoxy/Carbonsäureanhydrid und Isocyanat/Hydroxy.

Beispiele für die Vernetzungsmittel sind di- bis polyfunktionelle Acrylate und Methacrylate, einschließlich ungesättigter Polyester und Epoxidharzen. Bei den Vernetzungsmitteln kann es sich um definierte Einzelverbindungen oder Gemische von Verbindungen mit unterschiedlichem Polymerisationsgrad handeln. Beispiele sind Diethylenglycoldimethacrylat (DEGMA), Triethylenglycoldimethacrylat (TEGDMA), Bisphenol A-glycidylmethacrylat (BisGMA), Urethandimethacrylat (UDMA), Laromer^{®}-Acrylate der BASF, Ebecryl^{®}, Pentaerythrittriacrylat (PETIA), Hexandioldiacrylat, Trimethylolpropantriacrylat, Trimethylolpropantrimethacrylat, Neopentylglycoldimethacrylat, Neopentylglycoldiacrylat, Epoxyacrylatharze, oligomere Methacrylate, wie LR 8862, LR 8907 von BASF, oder oligomere Urethanacrylate, wie UA 19T von BASF.

Die vorstehend genannten Vernetzungsmittel mit Acryl- oder Methacrylgruppen werden bevorzugt eingesetzt, wenn funktionalisierte Organosilane mit (Meth)acryl-, (Meth)acryloxy- oder Vinylgruppen im Hydrolysat enthalten sind.

Das Gewichtsverhältnis von Siliciumverbindungen und Metallverbindungen insgesamt, die für das Hydrolysat oder Kondensat eingesetzt werden, zu dem organischen Vernetzungsmittel kann der Fachmann aus einem breiten Bereich in geeigneter Weise auswählen, wobei ein Gewichtsverhältnis im Bereich von 1:5 bis 1:0,3 bevorzugt ist. Das Molverhältnis von funktionellen Gruppen des funktionalisierten Organosilans zu den funktionellen Gruppen des Vernetzungsmittels kann in breiten Bereichen variieren, wobei ein bevorzugtes Molverhältnis im Bereich von 10:1 bis 1:2 liegt.

Das Vernetzungsmittel kann vor der Hydrolyse oder Kondensation zu den Ausgangsverbindungen des Hydrolysats oder Kondensats zugegeben werden oder vorzugsweise nach der Bildung des Hydrolysats oder Kondensats. Das erfindungsgemäß verwendete Konsolidierungsmittel liegt insbesondere partikelfrei als Lösung oder Emulsion vor. Vor der Anwendung kann das Konsolidierungsmittel durch Zusatz einer weiteren Wassermenge aktiviert werden.

Das Konsolidierungsmittel kann herkömmliche Additive enthalten und Lösungsmittel wie Wasser, Alkohole, vorzugsweise niedere aliphatische Alkohole (C₁-C₈-Alkohole), wie Methanol, Ethanol, 1-Propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₈-Alkoholen, Amide, wie Dimethylformamid, Tetrahydrofuran, Dioxan, Sulfoxide, Sulfone oder Butylglycol und deren Gemische. Bevorzugt werden Wasser und Alkohole verwendet. Es können auch hochsiedende Lösungsmittel eingesetzt werden, z.B. Polyether wie Triethylenglycol, Diethylenglycoldiethylether und Tetraethylenglycoldimethylether. In manchen Fällen finden auch andere Lösungsmittel Verwendung, z.B. Leichtparaffine (Petrolether, Alkane und Cycloalkane), Aromaten, Heteroaromaten und halogenierte Kohlenwasserstoffe. Anwendung können auch Dicarbonsäureester wie Bernsteinsäuredimethylester, Adipinsäuredimethylester, Glutarsäuredimethylester und deren Mischungen sowie die cyclische Carbonsäureester wie z.B. Propylencarbonat und Glycerincarbonat finden.

Andere herkömmliche Additive sind z. B. Farbstoffe, Pigmente, Viskositätsregulatoren und Tenside. Für die Herstellung von Emulsionen des Konsolidierungsmittels können die bei Siliconemulsionen üblichen stabilisierenden Emulgatoren wie z. B. Tween^{®} 80 und Brij^{®} 30 herangezogen werden.

Das Konsolidierungsmittel enthält vorzugsweise auch einen thermischen Katalysator, der auch als Starter oder Initiator bezeichnet wird, um die thermische Härtung bzw. Vernetzung zu initiieren. Diese thermischen Katalysatoren sind dem Fachmann bekannt und er kann die geeigneten unter Berücksichtigung der verwendeten Komponenten ohne weiteres auswählen. Beispiele für radikalische Thermostarter sind organische Peroxide, z.B. Diacylperoxide, Peroxydicarbonate, Alkylperester, Alkylperoxide, Perketale, Ketonperoxide und Alkylhydroperoxide, und Azoverbindungen. Konkrete Beispiele sind Dibenzoylperoxid, tert-Butylperbenzoat, Amylperoxy-2-ethylhexanoat und Azobisisobutyronitril. Diese Starter werden in den üblichen, dem Fachmann bekannten Mengen eingesetzt, z.B. 0,01 bis 5 Gew.-%, bezogen auf den Gesamtfeststoffgehalt des Konsolidierungsmittels.

Zur Herstellung von konsolidierten Proppants wird das Konsolidierungsmittel mit den zu konsolidierenden Proppants vermengt, z.B. durch Mischen, Einpumpen oder Injektion, und dann gehärtet. Es kann z.B. nachträglich nach dem Positionieren der Proppants im Fracture in den Proppant-tragenden Formationsspalt injiziert und anschließend gehärtet werden.

Die Konsolidierung bzw. Härtung erfolgt unter erhöhter Temperatur und erhöhtem Druck, bezogen auf die Normalbedingungen, d.h. der Druck ist größer als 1 bar und die Temperatur ist höher als 20°C. Bevorzugt wird das Konsolidierungsmittel bei einer Temperatur und einem Druck, die etwa den geologischen Rahmenbedingungen des Reservoirs entsprechen, in denen die Proppants eingesetzt werden, gehärtet, in der Regel bei Temperaturen oberhalb 40°C und mindestens 8 bar. In Abhängigkeit von der Formationstiefe können Temperaturen bis 160°C und Drücke bis 500 bar für die Härtung notwendig sein. Die Härtung erfolgt bevorzugt unter Hydrothermalbedingungen des Reservoirs, bei dem der Einsatz vorgesehen ist.

Es ist bekannt, dass eine thermische Härtung von Konsolidierungsmitteln unter Umgebungsdruck recht unproblematisch ist. Durch das kontinuierliche Entfernen des Lösungsmittels und des Reaktionsproduktes Wasser aus der Mischung von Bindemittelsol und zu konsolidierendem Material kommt es zu einer fortschreitenden Kondensationsreaktion. Im weiteren thermischen Härtungsprozess wird das Konsolidierungsmittel auf dem zu verfestigenden Material verdichtet.

Die Eigenschaften von konsolidierten Materialien hängen aber auch von den Bedingungen ab, unter denen sie hergestellt werden. In der Regel erhält man ein verbessertes Verhalten der konsolidierten Materialien, wenn sie bei etwa den gleichen Bedingungen hergestellt werden, bei denen sie eingesetzt werden sollen. Für Anwendungen von konsolidierten Materialien bei erhöhten Drücken und Temperaturen ist es daher wünschenswert, auch die Herstellung unter etwa den gleichen Bedingungen durchzuführen. Dies ist aber für die Konsolidierungsmittel nach dem Stand der Technik problematisch, da bei einer Härtung von Konsolidierungsmitteln nach dem Stand der Technik bei erhöhtem Druck und erhöhter Temperatur, d. h. unter Hydrothermalbedingungen, Lösungsmittel und Reaktionsprodukte im System verbleiben und lediglich eine Gleichgewichtseinstellung ermöglichen. Die Gleichgewichtslage unter diesen Bedingungen liefert jedoch keine verfestigten bzw. konsolidierten Materialien.

Es wurde festgestellt, dass die Gleichgewichtslage durch den Einsatz der Metallverbindungen der Formel (III) verändert wird, so dass ein Abbinden des eingesetzten Konsolidierungsmittels unter Hydrothermalbedingungen (erhöhtem Druck und erhöhter Temperatur) möglich wurde. Auf diese Weise können konsolidierte Proppants unter Hydrothermalbedingungen erhalten werden. Durch den Einsatz der organischen Vernetzungsmittel wird zudem eine verbesserte mechanische Festigkeit und eine gute Flexibilität erreicht.

Die Härtung des Konsolidierungsmittels unter Hydrothermalbedingungen kann auch durch Zugabe von Anhydriden zum Konsolidierungsmittel unterstützt werden. Mit Hilfe der Anhydride können Kondensationsprodukte wie Wasser und Ethanol abgefangen werden. Bei den Anhydriden handelt es sich bevorzugt um Anhydride von organischen Säuren oder Mischungen von diesen Anhydriden. Beispiele sind Essigsäureanhydrid, Methylnadinsäureanhydrid, Phthalsäureanhydrid, Bernsteinsäureanhydrid sowie Mischungen davon.

Bei der Zugabe von Anhydriden ist es bevorzugt, z.B. cyclische Kohlensäureester, wie Propylencarbonat, oder Carbonsäureester, wie Glutarsäuredimethylester, Adipinsäuredimethylester und Bernsteinsäuredimethylester, oder Dicarbonsäuredimethylester-Mischungen aus den genannten Estern, als Lösungsmittel zu verwenden. In der Regel kann hierfür das geeignete Lösungsmittel durch das bei der Herstellung des Konsolidierungsmittels verwendete oder gebildete Lösungsmittel vollständig oder teilweise ausgetauscht werden. Neben dem Lösungsmittelaustausch ist es auch möglich, schon bei Herstellung des Konsolidierungsmittels ein bevorzugtes Lösungsmittel einzusetzen.

Die Härtung von zu konsolidierenden Proppants ist somit unter Hydrothermalbedingungen möglich. Die funktionellen Gruppen des funktionalisierten Organosilans sind mit den funktionellen Gruppen des Vernetzungsmittels reaktionsfähig, so dass unter den Härtungsbedingungen zwischen ihnen kovalente Bindungen gebildet werden. Auf diese Weise wird ein organisches Netzwerk gebildet, dass über die funktionellen Gruppen kovalent mit dem gebildeten anorganischen Netzwerk verknüpft wird. Dabei werden nach dem erfindungsgemäßen Verfahren interpenetrierende anorganische und organische Netzwerke gebildet, die den Proppant konsolidieren.

Da unter Hydrothermalbedingungen ein Verdichtungsprozeß des gelierten Konsolidierungsmittels teilweise oder ganz verhindert wird, kann das Konsolidierungsmittelgel die Poren großvolumig verschließen. Dies kann bevorzugt durch Durchleiten eines festen oder flüssigen Mediums in den zu konsolidierenden Proppant, der mit dem Konsolidierungsmittel vermengt ist, verhindert bzw. beseitigt werden, wodurch die Porosität in der gewünschten Weise eingestellt werden kann. Die Einleitung erfolgt insbesondere vor oder während des Härtungsvorgangs über einen bestimmten Zeitraum.

Parameter für das Durchpumpen, wie Dauer, Zeitpunkt, Menge oder Durchflussgeschwindigkeit der flüssigen oder gasförmigen Phase, können vom Fachmann ohne weiteres in geeigneter Weise gewählt werden, um die gewünschte Porosität einzustellen. Die Einleitung kann z.B. vor oder nach einer teilweisen Härtung erfolgen, wobei nach und/oder während der Einleitung eine vollständige Aushärtung erfolgt. Zur Einleitung eines flüssigen oder gasförmigen Mediums können z.B. ein inertes Lösungsmittel oder Gas, z. B. N₂, CO₂ oder Luft, eingepumpt werden, wodurch die Porenvolumina freigespült und Reaktionsprodukte abgeführt werden. Als Beispiele für Lösungsmittel für das flüssige Medium kann auf die vorstehend aufgeführten verwiesen werden. Das flüssige oder gasförmige Medium kann gegebenenfalls Katalysatoren und/oder Gas freisetzende Komponenten oder gelöste Stoffe enthalten.

Die Härtung des Konsolidierungsmittels kann gegebenenfalls durch Zufuhr von Kondensationskatalysatoren unterstützt werden, die eine Vernetzung der anorganisch vernetzbaren SiOH-Gruppen oder Metall-OH-Gruppen unter Bildung eines anorganischen Netzwerkes bewirken. Hierfür geeignete Kondensationskatalysatoren sind z. B. Basen oder Säuren, aber auch Fluoridionen oder Alkoxide. Diese können z.B. dem Konsolidierungsmittel kurz vor der Vermischung mit dem Proppant zugegeben werden. In einer bevorzugten Ausführungsform werden die vorstehend beschriebenen gasförmigen oder flüssigen Medien, die durch den Proppant oder die geologische Formation geleitet werden, mit dem Katalysator beladen. Der Katalysator ist dabei bevorzugt flüchtig, gasförmig oder verdampfbar. Der Katalysator kann gelöste Stoffe wie beispielsweise Zirconiumoxychlorid enthalten und in Form eines Gradienten zum Bindemittel zudosiert werden.

Die konsolidierten Proppants sind vorzugsweise porös, wobei der Porositätsgrad der konsolidierten Proppants (Verhältnis von Volumen der Poren zum Gesamtvolumen des Proppants) bevorzugt 5 bis 50% und besonders bevorzugt 20 bis 40% beträgt.

Zur experimentellen Simulation der geologischen Bedingungen wird zur Charakterisierung der Eigenschaften von Konsolidierungsmittel und konsolidierten Proppants bevorzugt eine in der Ölindustrie üblicherweise verwendete sogenannte "Displacement Cell" eingesetzt. In dieser Zelle wird ein zylindrischer Probekörper, der den zu konsolidierenden Proppant enthält, über die Mantelfläche aus Blei mit einem Confinement-Druck, welcher den geologischen Formationsdruck (z.B. 70 bar) simuliert, beaufschlagt und verdichtet. Über die Stirnflächen des Probezylinders erfolgt der Medienein- bzw. austrag gegen einen Gegendruck von beispielsweise 50 bar. Zur thermischen Aushärtung wird die Zelle temperiert. Es werden Festigkeiten bis 5,9 MPa erreicht. Die Festigkeit bleibt auch nach Auslagerung der Formkörper unter Hydrothermalbedingungen in korrosiven Medien erhalten.

Die erfindungsgemäßen Proppants können mit Vorteil bei der Gas-, Erdöl- oder Wasserförderung, insbesondere der Off-shore-Förderung, eingesetzt werden. Das erfindungsgemäße Konsolidierungsmittel ermöglicht aufgrund seiner chemischen Konstitution eine schnelle und wirksame Verfestigung. Durch den Einsatz des organischen Vernetzungsmittels kann die Festigkeit der konsolidierten Proppants um ein Mehrfaches erhöht werden.

In diesem Zusammenhang hat sich auch der zusätzliche Einsatz von Phenylsilanalkoxiden bewährt. Dies beruht vermutlich darauf, dass diese Verbindungen aufgrund der sterischen Hinderung der Phenylgruppe und der elektronischen Effekte nicht rasch abreagierbare OH-Gruppen aufweisen, die sich besonders gut mit der Oberfläche von anorganischen Materialien verbinden.

Die folgenden Beispiele und Vergleichsbeispiele erläutern die Erfindung.

### Beispiele

### Vergleichsbeispiel Konsolidierungsmittel ohne organischen Vernetzer MTTi_{0,1}P₃ 06

26,2 g MTEOS, 7,64 g TEOS und 0,087 g Titantetraisopropoxid wurden gemischt und unter starkem Rühren mit 12,63 g entionisiertem Wasser und 0,088 ml konzentrierter Salzsäure (37%) zur Reaktion gebracht. Nach dem Umschlagspunkt überschritt das Reaktionsgemisch ein Temperaturmaximum von 62°C. Nach Abkühlen der Reaktionsmischung auf 47°C wurde eine weitere Silanmischung, die aus 26,45 g Phenyltriethoxysilan, 6,54 g MTEOS und 7,64 g TEOS besteht, zum Ansatz gegeben und noch 5 Minuten weitergerührt. Nach Stehen über Nacht ist der Binder zur Konsolidierung von Proppants unter Hydrothermalbedingungen geeignet. Der pH-Wert kann je nach Anforderungen im Bereich zwischen pH 0 und 7 eingestellt werden.

Hierzu wurden z.B. 100 g Proppants mit 10 g Toluol vermischt und in eine zylinderförmige Bleihülse gepackt. Die planaren Kopfenden des Zylinders wurden mit einem Drahtsieb belegt. In einer Displacement-Zelle wurde der Probekörper mit Hilfe eines auf den Bleimantel angelegten Drucks von 250 bar (Confinement-Druck) 1 h verdichtet. Anschließend wurde das Bindemittel bei 120°C mit einer Flussrate von 0,5 ml bei einem Confinement-Druck von 70 bar und gegen einen mit einer N₂-Gasflasche angelegten Gegendruck von 20 bar in den Proppant-Körper injiziert. Nach Injektion von zwei Porenvolumina Bindemittel wurde die Porosität durch 30-minütiges Einblasen von N₂ eingestellt und 14 h nachgehärtet. Die erhaltenen Formkörper zeigen Druckfestigkeiten im Bereich von 0,3 bis 0,5 MPa sowie eine Porosität zwischen 36 und 40%.

### Beispiel 1 Konsolidierungsmittel mit organischem Vernetzer MPMTTi_{0,1}- DEGDMAIAIBN

8,92 g MTEOS, 39,05 g TEOS, 156,51 g Methacryloxypropyltrimethoxysilan und 0,246 g Titantetraisopropoxid wurden gemischt und unter starkem Rühren mit 48,07 g entionisiertem Wasser und 1,25 ml konzentrierter Salzsäure (37%) zur Reaktion gebracht. Nach dem Umschlagspunkt überschritt das Reaktionsgemisch ein Temperaturmaximum von 57°C. Nach Abkühlen der Reaktionsmischung auf 25°C wurde dem Reaktionsgemisch eine Mischung, die aus 96,1 g Diethylenglykoldimethacrylat und 0,235 g 2,2'-Azodi(isobutyronitril) (AIBN) besteht, zugegeben und noch 5 Minuten weitergerührt. Der Binder wurde anschließend zur Konsolidierung von Proppants unter Hydrothermalbedingungen bei 70°C und 70 bar eingesetzt. Nach Injektion im Displacement-Experiment resultieren Festigkeiten bis 5,9 MPa.

### Beispiel 2 Konsolidierungsmittel mit organischem Vernetzer MTMPTi_{0,1}-DEGDMA/AIBN

63,85 g MTEOS, 30,83 g TEOS, 31,29 g Methacryloxypropyltrimethoxysilan und 0,179 g Titantetraisopropoxid wurden gemischt und unter starkem Rühren mit 19,39 g entionisiertem Wasser und 3,19 g TiOSO₄/H₂SO₄ zur Reaktion gebracht. Nach dem Umschlagspunkt überschritt das Reaktionsgemisch ein Temperaturmaximum von 68°C. Nach Abkühlen der Reaktionsmischung auf 25°C wurde dem Reaktionsgemisch eine Mischung zugegeben, die aus 50,45 g Diethylenglykoldimethacrylat und 0,823 g 2,2'-Azodi(isobutyronitril) (AIBN) besteht, und noch 5 Minuten weitergerührt. Der Binder wurde anschließend zur Konsolidierung von Proppants unter Hydrothermalbedingungen bei 70°C und 70 bar eingesetzt. Nach Injektion im Displacement Experiment resultieren Festigkeiten bis 2,0 MPa.

### Beispiel 3 Konsolidierungsmittel mit organischem Vernetzer MTMP-VTi_{0,1} - TEGDMA-BisGMA/Trigonox 121

63,85 g MTEOS, 30,83 g TEOS, 28,16 g Methacryloxypropyltrimethoxysilan, 2,40 g Vinyltriethoxysilan und 0,18 g Titantetraisopropoxid wurden gemischt und unter starkem Rühren mit 19,39 g entionisiertem Wasser und 3,19 g TiOSO₄/H₂SO₄ zur Reaktion gebracht. Nach dem Umschlagspunkt überschritt das Reaktionsgemisch ein Temperaturmaximum von 68°C. Nach Abkühlen der Reaktionsmischung auf 25°C wurde dem Reaktionsgemisch eine Mischung zugegeben, die aus 47,7 g Triethylenglykoldimethacrylat, 21,35 g ethoxyliertes Bisphenol A-glycidyldimethacrylat (Ebecryl® 150) und 1,154 g tert.-Amylperoxy-2-ethylhexanoate (Trigonox 121) besteht, und noch 5 Minuten weitergerührt. Der Binder wird anschließend zur Konsolidierung von Proppants unter Hydrothermalbedingungen bei 70°C und 70 bar eingesetzt. Nach Injektion im Displacement Experiment resultieren Festigkeiten bis 2,1 MPa.

## Patentansprüche

1. Verfahren zur Herstellung von konsolidierten Proppants, bei dem man
(A) ein Konsolidierungsmittel mit einem Proppant vermengt und
(B) das mit dem Proppant vermengte Konsolidierungsmittel unter erhöhtem Druck von größer 1 bar und erhöhter Temperatur von höher als 20°C härtet,
wobei das Konsolidierungsmittel
(A1) ein Hydrolysat oder Kondensat aus
(a) mindestens einem funktionalisierten Organosilan der allgemeinen Formel (I)
(Rx)_{b}R_{c}SiX_{4-b-c} (I)
worin die Reste Rx gleich oder verschieden sind und hydrolytisch nicht abspaltbare Gruppen darstellen, die mindestens eine vernetzbare funktionelle Gruppe umfassen, die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen, b den Wert 1, 2 oder 3 hat und c den Wert 0, 1 oder 2 hat, wobei die Summe (b+c) 1, 2 oder 3 ist;
(b) gegebenenfalls mindestens einem hydrolysierbaren Silan der allgemeinen Formel (II)
SiX₄ (II)
worin X wie in Formel (I) definiert ist; und
(c) mindestens einer Metallverbindung der allgemeinen Formel (III)
MXₐ (III)
worin M ein Metall der Hauptgruppen I bis VIII oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht;
wobei das molare Verhältnis von eingesetzten Siliciumverbindungen zu eingesetzten Metallverbindungen im Bereich von 10.000:1 bis 10:1 liegt, und
(A2) ein organisches Vernetzungsmittel mit mindestens zwei funktionellen Gruppen
umfasst.

2. Verfahren nach Anspruch 1, **dadurch gekennzeichnet, dass** das Hydrolysat oder Kondensat (A1) gebildet wird durch Hydrolyse oder Kondensation von
(a) mindestens einem funktionalisierten Organosilan der allgemeinen Formel (I) wie in Anspruch 1 definiert,
(d) mindestens einem Organosilan der allgemeinen Formel (la)
RₙSiX₄₋ₙ (la)
worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat,
(b) mindestens einem hydrolysierbaren Silan der allgemeinen Formel (II) wie in Anspruch 1 definiert und
(c) mindestens einer Metallverbindung der allgemeinen Formel (III) wie in Anspruch 1 definiert;
wobei das molare Verhältnis von eingesetzten Siliciumverbindungen zu eingesetzten Metallverbindungen im Bereich von 10.000:1 bis 10:1 liegt.

3. Verfahren nach Anspruch 1 oder Anspruch 2, **dadurch gekennzeichnet, dass** das Gewichtsverhältnis von Siliciumverbindungen und Metallverbindungen insgesamt, die für das Hydrolysat oder Kondensat eingesetzt werden, zu dem organischen Vernetzungsmittel im Bereich von 1:5 bis 1:0,3 liegt.

4. Verfahren nach einem der Ansprüche 1 bis 3, **dadurch gekennzeichnet, dass** das Molverhältnis von funktionellen Gruppen des funktionalisierten Organosilans zu den funktionellen Gruppen des Vernetzungsmittels im Bereich von 10:1 bis 1:2 liegt.

5. Verfahren nach einem der Ansprüche 1 bis 4, **dadurch gekennzeichnet, dass** das die funktionellen Gruppen des funktionalisierten Organosilans und des Vernetzungsmittels Vinyl-, Acryl- oder Methacrylgruppen sind.

6. Verfahren nach einem der Ansprüche 1 bis 5, **dadurch gekennzeichnet, dass** das Vernetzungsmittel ein di- oder polyfunktionelles Acrylat oder Methacrylat, ein ungesättigter Polyester oder ein Epoxidharz ist.

7. Verfahren nach einem der Ansprüche 1 bis 6, **dadurch gekennzeichnet, dass** das Konsolidierungsmittel bei einer Temperatur von mindestens 40°C und einem Druck von mindestens 8 bar gehärtet wird.

8. Verfahren nach einem der Ansprüche 1 bis 7, **dadurch gekennzeichnet, dass** das Metall der Metallverbindung der allgemeinen Formel (III) aus B, Al, Zr und insbesondere Ti ausgewählt wird.

9. Verfahren nach einem der Ansprüche 1 bis 8, **dadurch gekennzeichnet, dass** vor und/oder während der Härtung für einen bestimmten Zeitraum ein flüssiges oder gasförmiges Medium, insbesondere Luft, durch den zu konsolidierenden Proppant, der mit dem Konsolidierungsmittel vermengt ist, geleitet wird, um die Porosität einzusehen.

10. Verfahren nach einem der Ansprüche 1 bis 9, **dadurch gekennzeichnet, dass** der Proppant nach dessen Plazierung im Fracture durch nachträgliche Injektion des Konsolidierungsmittels und anschließende Härtung konsolidiert wird.

11. Verfahren nach einem der Ansprüche 1 bis 10, **dadurch gekennzeichnet, dass** das Konsolidierungsmittel ein Hydrolysat oder Vorkondensat von (a) einem Vinyl-, Acryl- oder Methacrylsilan, (d) einem Alkylsilan, (b) einem Orthokieselsäureester und (c) einem Metallalkoxylat umfasst.

12. Verfahren nach einem der Ansprüche 1 bis 11, **dadurch gekennzeichnet, dass** das Konsolidierungsmittel vor der Vermengung mit dem Proppant partikelfrei vorliegt.

13. Verfahren nach einem der Ansprüche 1 bis 12, **dadurch gekennzeichnet, dass** der Proppant aus Pellets oder Teilchen aus Sand, Keramik, Walnussschalen, Aluminium oder Nylon besteht.

14. Unter Hydrothermalbedingungen hydrolytisch beständiger konsolidierter Proppant, erhältlich nach einem Verfahren der Ansprüche 1 bis 13.

15. Unter Hydrothermalbedingungen hydrolytisch beständiger konsolidierter Proppant nach Anspruch 14, **dadurch gekennzeichnet, dass** er porös ist.

## Claims

1. A process for the preparation of consolidated proppants, in which
(A) a consolidating agent is mixed with a proppant and
(B) the consolidating agent mixed with the proppant is cured at elevated pressure of more than 1 bar and elevated temperature of more than 20 °C,
the consolidating agent comprising
(A1) a hydrolysate or condensate of
(a) at least one functionalized organosilane of the general formula (I)
(Rx)_{b}R_{c}SiX_{4-b-c} (I)
in which the radicals Rx are identical or different and represent groups which cannot be eliminated hydrolytically and comprise at least one crosslinkable functional group, the radicals R are identical or different and represent groups which cannot be eliminated hydrolytically, the radicals X are identical or different and represent groups which can be eliminated hydrolytically or hydroxyl groups, b has the value 1, 2 or 3 and c has the value 0, 1 or 2, the sum (b+c) being 1, 2 or 3;
(b) optionally at least one hydrolyzable silane of the general formula (II)
SiX₄ (II)
in which X is as defined in formula (I); and
(c) at least one metal compound of the general formula (III)
MXₐ (III)
in which M is a metal of main groups I to VIII or of subgroups II to VIII of the Periodic Table of the Elements, including boron, X is as defined in formula (I) it being possible for two groups X to be replaced by an oxo group, and a corresponds to the valency of the element;
the molar ratio of silicon compounds used to metal compounds used being in the range of 10000:1 to 10:1, and
(A2) an organic crosslinking agent having at least two functional groups.

2. The process according to claim 1, **characterized in that** the hydrolysate or condensate (A1) is formed by hydrolysis or condensation of
(a) at least one functionalized organosilane of the general formula (I) as defined in claim 1,
(d) at least one organosilane of the general formula (Ia)
RₙSiX₄₋ₙ (Ia)
in which the radicals R are identical or different and represent groups which cannot be eliminated hydrolytically, the radicals X are identical or different and represent groups which can be eliminated hydrolytically or hydroxyl groups and n has the value 1, 2 or 3,
(b) at least one hydrolyzable silane of the general formula (II) as defined in claim 1 and
(c) at least one metal compound of the general formula (III) as defined in claim 1;
the molar ratio of silicon compounds used to metal compounds used being in the range of 10000:1 1 to 10:1.

3. The process according to claim 1 or claim 2, **characterized in that** the weight ratio of silicon compounds and metal compounds together, which are used for the hydrolysate or condensate, to the organic crosslinking agent is in the range of 1:5 to 1:0.3.

4. The process according to any of claims 1 to 3, **characterized in that** the molar ratio of functional groups of the functionalized organosilane to the functional groups of the crosslinking agent is in the range of 10:1 to 1:2.

5. The process according to any of claims 1 to 4, **characterized in that** the functional groups of the functionalized organosilane and of the crosslinking agent are vinyl, acryloyl or methacryloyl groups.

6. The process according to any of claims 1 to 5, **characterized in that** the crosslinking agent is a di- or polyfunctional acrylate or methacrylate, an unsaturated polyester or an epoxy resin.

7. The process according to any of claims 1 to 6, **characterized in that** the consolidating agent is cured at a temperature of at least 40°C and a pressure of at least 8 bar.

8. The process according to any of claims 1 to 7, **characterized in that** the metal of the metal compound of the general formula (III) is selected from B, Al, Zr and in particular Ti.

9. The process according to any of claims 1 to 8, **characterized in that**, before and/or during the curing, a liquid or gaseous medium, in particular air, is passed for a certain period through the proppant which is to be consolidated and which is mixed with the consolidating agent, in order to adjust the porosity.

10. The process according to any of claims 1 to 9, **characterized in that**, after it has been placed in the fracture, the proppant is consolidated by subsequent injection of the consolidating agent and subsequent curing.

11. The process according to any of claims 1 to 10, **characterized in that** the consolidating agent comprises a hydrolysate or precondensate of (a) a vinyl-, acryloyl- or methacryloylsilane, (d) an alkylsilane, (b) an orthosilicic acid ester and (c) a metal alkoxylate.

12. The process according to any of claims 1 to 11, **characterized in that** the consolidating agent is present in particle-free form prior to mixing with the proppant.

13. The process according to any of claims 1 to 12, **characterized in that** the proppant consists of pellets or particles of sand, ceramic, walnut shell, aluminium or nylon.

14. A consolidated proppant having hydrolytic stability under hydrothermal conditions, obtainable by a process of claims 1 to 13.

15. The consolidated proppant having hydrolytic stability under hydrothermal conditions according to claim 14, **characterized in that** it is porous.

## Revendications

1. Procédé de production d'agents de soutènement consolidés, dans lequel :
(A) un agent de consolidation est mélangé à un agent de soutènement, et
(B) l'agent de consolidation mélangé à l'agent de soutènement est durci sous une pression élevée, supérieure à 1 bar, et une température élevée, supérieure à 20 °C,
l'agent de consolidation :
(A1) comprenant un hydrolysat ou un condensat
(a) d'au moins un organosilane fonctionnalisé de formule générale (I)
(Rx)_{b}R_{c}SiX_{4-b-c} (I)
les restes Rx étant égaux ou différents et constituant des groupes hydrolytiquement non clivables qui comprennent au moins un groupe fonctionnel réticulable, les restes R étant égaux ou différents et constituant des groupes hydrolytiquement non clivables, les restes X étant égaux ou différents et constituant des groupes hydrolytiquement clivables ou des groupes hydroxy, b ayant la valeur 1, 2 ou 3 et c la valeur 0, 1 ou 2, le total (b+c) étant égal à 1, 2 ou 3 ;
(b) le cas échéant, d'au moins un silane hydrolysable de formule générale (II)
SiX₄ (II)
X étant défini comme en formule (I) ; et
(c) d'au moins un composé métallique de formule générale (III)
MXₐ (III)
M étant un métal des groupes principaux I à VIII ou des groupes secondaires II à VIII du système périodique des éléments, bore inclus, X étant défini comme en formule (I), deux groupes X pouvant être substitués par un groupe oxo, et a correspondant à la valence de l'élément ;
le rapport molaire entre les composés de silicium mis en oeuvre et les composés métalliques mis en oeuvre étant compris entre 10 000:1 et 10:1, et
(A2) un agent réticulant organique avec au moins deux groupes fonctionnels.

2. Procédé selon la revendication 1, **caractérisé en ce que** l'hydrolysat ou le condensat (A1) est formé par hydrolyse ou condensation :
(a) d'au moins un organosilane fonctionnalisé de formule générale (I) tel que défini en revendication 1,
(d) d'au moins un organosilane de formule générale (Ia)
RₙSiX₄₋ₙ (Ia)
les restes R étant égaux ou différents et constituant des groupes hydrolytiquement non clivables, les restes X étant égaux ou différents et constituant des groupes hydrolytiquement clivables ou des groupes hydroxy, et n ayant la valeur 1, 2 ou 3,
(b) d'au moins un silane hydrolisable de formule générale (II) tel que défini en revendication 1, et
(c) d'au moins un composé métallique de formule générale (III) tel que défini en revendication 1 ;
le rapport molaire entre les composés de silicium mis en oeuvre et les composés métalliques mis en oeuvre étant compris entre 10 000:1 et 10:1.

3. Procédé selon la revendication 1 ou la revendication 2, **caractérisé en ce que** le rapport en poids entre le total des composés de silicium et composés métalliques mis en oeuvre pour l'hydrolysat ou le condensat et l'agent réticulant organique est compris entre 1:5 et 1:0,3.

4. Procédé selon l'une des revendications 1 à 3, **caractérisé en ce que** le rapport molaire entre groupes fonctionnels de l'organosilane fonctionnalisé et groupes fonctionnels de l'agent réticulant est compris entre 10:1 et 1:2.

5. Procédé selon l'une des revendications 1 à 4, **caractérisé en ce que** les groupes fonctionnels de l'organosilane fonctionnalisé et de l'agent réticulant sont des groupes vinyle, acryle ou méthacryle.

6. Procédé selon l'une des revendications 1 à 5, **caractérisé en ce que** l'agent réticulant est un acrylate ou méthacrylate di- ou polyfonctionnel, un polyester non saturé ou une résine époxyde.

7. Procédé selon l'une des revendications 1 à 6, **caractérisé en ce que** l'agent de consolidation est durci sous une température d'au moins 40 °C et une pression d'au moins 8 bar.

8. Procédé selon l'une des revendications 1 à 7, **caractérisé en ce que** le métal du composé métallique de formule générale (III) est sélectionné entre B, Al, Zr, et en particulier Ti.

9. Procédé selon l'une des revendications 1 à 8, **caractérisé en ce qu'**avant et/ou pendant le durcissement, un fluide liquide ou gazeux, en particulier de l'air, est passé pendant une durée déterminée au travers de l'agent de soutènement à consolider qui est mélangé à l'agent de consolidation, pour ajuster la porosité.

10. Procédé selon l'une des revendications 1 à 9, **caractérisé en ce qu'**après sa mise en place dans la fracture, l'agent de soutènement est consolidé par injection ultérieure de l'agent de consolidation et durcissement consécutif.

11. Procédé selon l'une des revendications 1 à 10, **caractérisé en ce que** l'agent de consolidation est un hydrolysat ou un pré-condensat (a) d'un vinylsilane, acrylsilane ou méthacrylsilane, (d) d'un alkylsilane, (b) d'un ester d'acide orthosilicique et (c) d'un alcoxylate métallique.

12. Procédé selon l'une des revendications 1 à 11, **caractérisé en ce que** l'agent de consolidation est exempt de particules avant mélange à l'agent de soutènement.

13. Procédé selon l'une des revendications 1 à 12, **caractérisé en ce que** l'agent de soutènement est constitué de granules ou de particules de sable, céramique, coquilles de noix, aluminium ou Nylon.

14. Agent de soutènement consolidé, hydrolytiquement résistant dans des conditions hydrothermiques, obtenu au moyen d'un procédé selon les revendications 1 à 13.

15. Agent de soutènement consolidé, hydrolytiquement résistant dans des conditions hydrothermiques selon la revendication 14, **caractérisé en ce qu'**il est poreux.
